# EUROPÄISCHE PATENTSCHRIFT

(11) **EP 3 215 743 B1**
(45) Veröffentlichungstag und Bekanntmachung des Hinweises auf die Patenterteilung: **24.10.2018**
(21) Anmeldenummer: 15788047.7
(22) Anmeldetag: 02.11.2015
(51) Int. Cl.: F04C 2/10, F04C 14/12

(54) **VERDRÄNGERPUMPE**
POSITIVE DISPLACEMENT PUMP
POMPE À DÉPLACEMENT POSITIF

(30) Priorität: 03.11.2014 DE 102014222396
(43) Veröffentlichungstag der Anmeldung: 13.09.2017
(73) Patentinhaber: Continental Automotive GmbH, 30165 Hannover (DE)
(72) Erfinder: BÖHM, Christian, 60316 Frankfurt am Main (DE)
(86) Internationale Anmeldenummer: PCT/EP2015/075458
(87) Internationale Veröffentlichungsnummer: WO 2016/071274

(56) Entgegenhaltungen:
- EP-A1- 0 785 361
- EP-A1- 2 628 954
- FR-A1- 2 689 185
- US-A- 3 208 392
- US-A- 3 857 461

## Beschreibung

Die Erfindung betrifft eine Verdrängerpumpe, insbesondere zur Förderung von Öl in einem Getriebe oder einer Brennkraftmaschine eines Kraftfahrzeuges, mit einer von einer Antriebseinheit antreibbaren Pumpenstufe, mit einem Sauganschluss zur Einführung von Öl und einem Druckanschluss zur Abgabe von Öl und mit einer Umschalteinrichtung zur Erzeugung zweier Betriebsstufen.

Solche Verdrängerpumpen werden bei heutigen Kraftfahrzeugen beispielsweise zur Förderung von Schmieröl in der Brennkraftmaschine oder von Getriebeöl im Getriebe eingesetzt und sind aus der Praxis bekannt. Die Einsatzgebiete weisen jedoch meist unterschiedliche Auslegungspunkte auf, die durch entsprechende Betriebstufen der Pumpenstufe und der Antriebseinheit erreicht werden müssen. Die Auslegungspunkte betreffen insbesondere in Abhängigkeit des Betriebszustandes des Getriebes oder der Brennkraftmaschine eine geringe Fördermenge bei hohem Druck oder eine hohe Fördermenge bei geringem Druck.

Aus der DE 36 14 819 C2 ist eine Verdrängerpumpe bekannt geworden, bei der ein Hochdruckkreis und ein Niederdruckkreis mit einer geteilten Druckniere versorgt werden. Die Pumpenstufe hat zudem zwei durch eine Mittelwand getrennte Pumpenräume.

Aus den Druckschriften FR 2 689 185 A1, EP 2 628 954 A1 und EP 0785 361 A1 ist jeweils eine Ölpumpe bekannt, bei der auslassseitig bzw. druckseitig ein Schaltventil zwischen einer ersten und einer zweiten Ölleitung angeordnet ist, um die Fördercharakteristik der Ölpumpe drehzahlabhängig zu verändern.

Aus der US 3 857 461 A ist eine bidirektional wirkende Pumpe in Gestalt einer Zahnradpumpe bekannt, deren zwei Zahnräder - von denen eines treibend und das andere getrieben ist - sowohl im als auch gegen den Uhrzeigersinn über ein mit der Zahnradpumpe verbundenes Getriebe antreibbar sind, welches mit dem getriebenen der beiden Zahnräder in Wirkverbindung steht und sowohl im als auch gegen den Uhrzeigersinn treibend wirken kann. Die Pumpe dient dabei der Versorgung zweier Schmierkreisläufe zur Schmierung zweier Schmiersysteme eines landwirtschaftlichen Fahrzeugs in Gestalt eines Traktors.

Aus der US 3 208 392 ist eine bidirektional wirkende Innenzahnradpumpe bekannt, die eine unidirektionale Strömung, unabhängig von der Pumpendrehrichtung, bereitstellt.

Der Erfindung liegt das Problem zugrunde eine Verdrängerpumpe der eingangs genannten Art so zu gestalten, dass sie besonders kompakt aufgebaut ist.

Dieses Problem wird erfindungsgemäß dadurch gelöst, dass der Sauganschluss mit einer zentralen Saugniere verbunden ist und der Druckanschluss mit zwei Drucknieren in Abhängigkeit von der gewählten Betriebsstufe verbindbar ist.

Durch diese Gestaltung lassen sich die Saug- und Drucknieren auf einer Seite des Gehäuses anordnen. Die Verdrängerpumpe gestaltet sich damit besonders kompakt. Die Position und Größe der Drucknieren lassen sich auf die gewünschten Fördervolumen und Förderdrücke der vorgesehenen Auslegungspunkte anpassen. Durch eine Verbindung der jeweiligen Druckniere mit dem einzigen Druckanschluss wird die zu dem Auslegungspunkt passende Betriebsstufe ausgewählt. Damit können Drehzahl und Drehmoment der Antriebseinheit einfach auf die Betriebsstufen angepasst und der Wirkungsgrad gesteigert werden.

Die Umschalteinrichtung gestaltet sich besonders einfach, wenn die Umschalteinrichtung mit der Antriebseinheit zur wahlweisen Steuerung der Antriebsrichtung der Pumpenstufe verbunden ist. Durch diese Gestaltung lassen sich die Betriebsstufen von der Drehrichtung der Antriebseinheit festlegen. Die Umschalteinrichtung benötigt im einfachsten Fall Schalter zur Polung eines Elektromotors der Antriebseinheit.

Die Steuerung der Strömung von den Drucknieren zu dem Druckanschluss gestaltet sich gemäß einer anderen vorteilhaften Weiterbildung der Erfindung besonders einfach, wenn die beiden Drucknieren über Rückschlagventile mit dem einzigen Druckanschluss verbunden sind.

Ein Druckausgleich der in dem jeweiligen Betriebsstufe nicht genutzten Druckniere mit der Umgebung lässt sich gemäß einer anderen vorteilhaften Weiterbildung der Erfindung einfach sicherstellen, wenn die beiden Drucknieren über Rückschlagventile mit dem Sauganschluss verbunden sind. Die die Drucknieren mit dem Sauganschluss verbindende Rückschlagventile sind so ausgerichtet, dass bei einem Unterdruck in der Druckniere Öl einströmen kann.

Der bauliche Aufwand zur Verbindung des Druckanschlusses mit der gewählten Druckniere lässt sich gemäß einer anderen vorteilhaften Weiterbildung der Erfindung besonders gering halten, wenn die Umschalteinrichtung zur Verbindung des Druckanschlusses mit der einen oder der anderen Druckniere ausgebildet ist.

Eine hohe Anzahl an Rückschlagventilen lassen sich gemäß einer anderen vorteilhaften Weiterbildung der Erfindung einfach vermeiden, wenn der Pumpstufe ein Mehrwegeventil nachgeschaltet ist und wenn die Umschalteinrichtung zum Ansteuern des Mehrwegeventils ausgebildet ist, so dass eine wahlweise Verbindung der einen Druckniere oder der anderen Druckniere mit dem Druckanschluss herstellbar ist. Hierdurch wird die Anzahl an störanfälligen Bauteilen gering gehalten. Gleichzeitig wird sichergestellt, dass jeweils nur die vorgesehene Druckniere mit dem Druckanschluss verbunden ist. Ein weiterer Vorteil dieser Gestaltung besteht darin, dass die Verdrängerpumpe hierdurch besonders kompakt aufgebaut ist. Bei einer zur Förderung von Öl in einem Getriebe des Kraftfahrzeuges vorgesehenen Verdrängerpumpe lässt sich das Mehrwegeventil im einfachsten Fall in einer ohnehin vorhandenen Getriebesteuerung anordnen. Hierdurch wird der für die Verdrängerpumpe benötigte Bauraum besonders gering gehalten.

Der Druckausgleich der in der jeweiligen Betriebsstufe nicht genutzten Druckniere mit der Umgebung lässt sich gemäß einer anderen vorteilhaften Weiterbildung der Erfindung beim Einsatz eines Mehrwegeventils einfach erzeugen, wenn das Mehrwegeventil zwei Schaltstufen hat, wobei die Schaltstufen zur Verbindung des Sauganschlusses mit der in der jeweiligen Betriebsstufe nicht genutzten Druckniere ausgebildet sind.

Ein Abfall des Öldrucks in dem Getriebe oder der Brennkraftmaschine bei abgeschalteter Verdrängerpumpe lässt sich gemäß einer anderen vorteilhaften Weiterbildung der Erfindung einfach vermeiden, wenn das Mehrwegeventil eine Schaltstufe hat, in der der Druckanschluss abgesperrt ist.

Die Verdrängerpumpe weist gemäß einer anderen vorteilhaften Weiterbildung der Erfindung beim Einsatz im Kraftfahrzeug eine hohe Lebensdauer auf, wenn die Pumpenstufe als Innenzahnradpumpe oder als G-Rotorpumpe ausgebildet ist. Selbstverständlich können auch zwei parallel angeordnete Pumpenstufen von einer einzigen Antriebseinheit antreibbar sein.

Unterschiedliche Fördervolumen und Förderdrücke lassen sich gemäß einer anderen vorteilhaften Weiterbildung der Erfindung an den Betriebsstufen einfach festlegen, wenn ein Trennbereich zwischen Saugniere und einer der Drucknieren bei der als Innenzahnradpumpe ausgebildeten Pumpenstufe innerhalb des Bereichs der größten Exzentrizität zwischen einem Innenläufer und einem Außenläufer und ein anderer Trennbereich der Saugniere und der anderen der Drucknieren außerhalb des Bereichs der größten Exzentrizität angeordnet ist.

Die Erfindung lässt zahlreiche Ausführungsformen zu. Zur weiteren Verdeutlichung ihres Grundprinzips sind mehrere davon in der Zeichnung dargestellt und werden nachfolgend beschrieben. Diese zeigt in:
- Fig. 1: schematisch eine Verdrängerpumpe
- Fig. 2: eine Schnittdarstellung durch eine Pumpenstufe mit angrenzenden Bereichen der Verdrängerpumpe aus Figur 1,
- Fig. 3: eine Schnittdarstellung durch eine weitere Ausführungsform der Pumpenstufe mit angrenzenden Bereichen der Verdrängerpumpe aus Figur 1,
- Fig. 4a - 4c: mehrere Schaltstellungen eines Mehrwegeventils für die Pumpenstufe der Verdrängerpumpe.

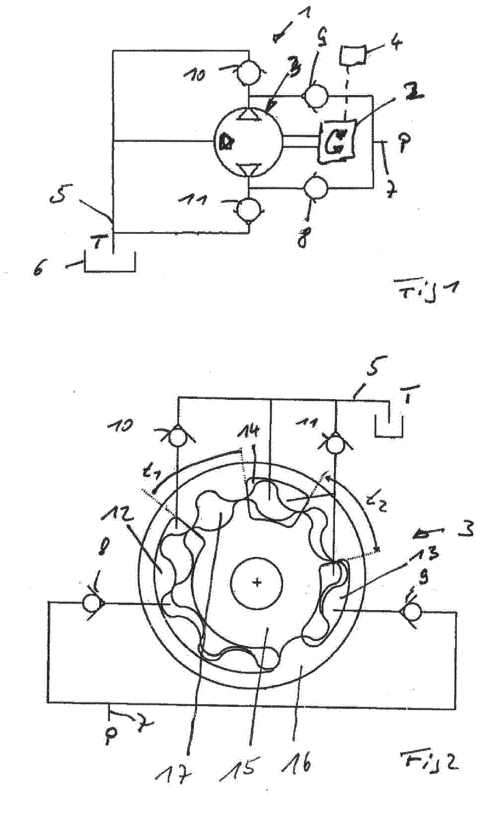

Figur 1 zeigt schematisch eine Verdrängerpumpe 1 mit einer motorischen Antriebseinheit 2 und einer Pumpenstufe 3. Die motorische Antriebseinheit 2 ist mit einer Umschalteinrichtung 4 verbunden und treibt die Pumpenstufe 3 wahlweise in der einen oder der anderen Drehrichtung an. Die Verdrängerpumpe 1 hat einen Sauganschluss 5, über den Öl aus einem Tank 6 oder einer Ölwanne angesaugt wird, und einen Druckanschluss 7, über den Öl zu einem nicht dargestellten Verbraucher, wie beispielsweise Schmierstellen einer Brennkraftmaschine oder eines Getriebes eines Kraftfahrzeuges, gefördert wird. Die Pumpenstufe 3 ist über insgesamt vier Rückschlagventile 8 - 11 mit dem Druckanschluss 7 und dem Sauganschluss 5 verbunden.

Wie Figur 2 schematisch in einer Schnittdarstellung zeigt, hat die Pumpenstufe 3 aus Figur 1 zwei Drucknieren 12, 13 und eine zentrale Saugniere 14. Über die Saugniere 14 wird in beiden Drehrichtungen der Pumpenstufe 3 Öl angesaugt. Die Drucknieren 12, 13 sind über zwei der Rückschlagventile 8, 9 mit dem Druckanschluss 7 verbunden. Weiterhin sind die Drucknieren 12, 13 über die weiteren Rückschlagventile 10, 11 mit dem Sauganschluss 5 verbunden. Die Pumpenstufe 3 ist als Innenzahnradpumpe ausgebildet und hat einen Innenläufer 15 und einen Außenläufer 16. Die Saugniere 14 und die Drucknieren 12, 13 sind in einem die Stirnseiten der Läufer abdichtenden Gehäuse 17 angeordnet.

Bei einer Drehung des Innenläufers 15 durch eine entsprechende Bestromung der Antriebseinheit 2 gegen den Uhrzeigersinn wird über die zentrale Saugniere 14 Öl aus dem Tank 6 oder der Ölwanne angesaugt und über die in der Zeichnung links dargestellte Druckniere 12 zu dem Druckanschluss 7 gefördert. Die in der Zeichnung rechts dargestellte Druckniere 13 saugt im Falle eines Unterdrucks ebenfalls Öl aus dem Sauganschluss 5 an und ergänzt damit die Funktion der Saugniere 14. Die Schaltung der Drucknieren 12, 13 mit dem Sauganschluss 5 oder dem Druckanschluss 7 erfolgt über die Rückschlagventile 8 - 11. Im Falle eines Antriebs des Innenläufers 15 im Uhrzeigersinn wird das Öl über die in der Zeichnung rechts dargestellte Druckniere 13 zu dem Druckanschluss 7 gefördert. Weiterhin zeigt Figur 2, dass die Pumpenstufe 3 in Abhängigkeit der gewählten Drehrichtung unterschiedlich große Trennbereiche t1, t2 zwischen der gemeinsamen Saugniere 14 und der genutzten Druckniere 12, 13 hat. Die Saugniere 14 ist außerhalb des Bereichs der größten Exzentrizität der Pumpenstufe 3 angeordnet. Damit ist einer der Trennbereiche t1 im Bereich der größten Exzentrizität und der andere der Trennbereiche t2 außerhalb der größten Exzentrizität angeordnet. Die Drucknieren 12, 13 weisen zudem unterschiedliche Abmessungen auf, so dass die Pumpenstufe 3 in Abhängigkeit von der zur Förderung genutzten Druckniere 12, 13 unterschiedliche Förderdrücke und Fördervolumen aufweisen.

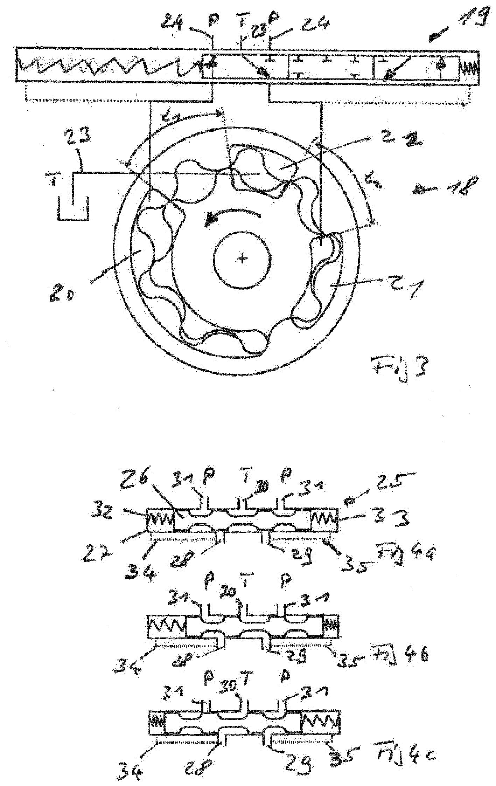

Figur 3 zeigt schematisch eine weitere Ausführungsform einer Pumpenstufe 18, welche sich von der aus Figur 2 nur dadurch unterscheidet, dass ein Mehrwegeventil 19 zur Steuerung von zwei Drucknieren 20, 21 mit dem Sauganschluss 23 und dem Druckanschluss 24 vorgesehen ist. Eine Saugniere 22 ist wie bei der Ausführungsform nach Figur 2 ungesteuert mit dem Sauganschluss 23 verbunden. Zur Steuerung des Mehrwegeventils sind in der Zeichnung gepunkelt Steuerleitungen dargestellt, über die die Stellung des Mehrwegeventils 19 in Abhängigkeit von der Drehrichtung der Pumpenstufe 18 gesteuert wird. Alternativ dazu kann das Mehrwegeventil 19 mit der in Figur 1 dargestellten Umschalteinrichtung 4 verbunden sein und zeitgleich mit dem Umschalten der Drehrichtung der Pumpenstufe 18 angesteuert werden.

Das Mehrwegeventil 19 hat drei Schaltstellungen, wobei eine der Schaltstellungen die Drucknieren 20, 21 und den Druckanschluss 24 absperrt.

Figuren 4a bis 4c zeigen ein Mehrwegeventil 25, welches beispielsweise in der Ausführungsform nach Figur 3 eingesetzt werden kann, mit einem Ventilkörper 26 und einem Ventilgehäuse 27. Das Mehrwegeventil hat jeweils einen zu einer Druckniere führbaren Anschluss 28, 29, einen Sauganschluss 30 und zwei Druckanschlüsse 31. In der in Figur 4a dargestellten Mittelstellung sind sämtliche Anschlüsse 28 - 31 geschlossen. In Figur 4b und 4c ist wahlweise der eine oder der andere der zu den Drucknieren führbaren Anschlüsse 28, 29 mit dem Druckanschluss 31 verbunden. Gleichzeitig wird die jeweils nicht zur Förderung von Öl genutzte Anschluss 29, 28 mit dem Sauganschluss 30 verbunden. Federelemente 32, 33 spannen das Mehrwegeventil 25 in die in Figur 4a dargestellte Mittelstellung vor. Die Position des Ventilkörpers 26 lässt sich beispielsweise mittels eines nicht dargestellten Elektromagneten von der Umschalteinrichtung 4 ansteuern. Zur Steuerung des Mehrwegeventils 25 sind Steuerleitungen 34, 35 vorgesehen, über die die Stellung des Mehrwegeventils 19 in Abhängigkeit von der Drehrichtung der Pumpenstufe 18 gesteuert wird.

## Patentansprüche

1. Verdrängerpumpe (1), insbesondere zur Förderung von Öl in einem Getriebe oder einer Brennkraftmaschine eines Kraftfahrzeuges, mit einer von einer Antriebseinheit (2) antreibbaren Pumpenstufe (3), mit einem Sauganschluss (5, 23, 30) zur Einführung von Öl und einem Druckanschluss (7, 24, 31) zur Abgabe von Öl und mit einer Umschalteinrichtung (4) zur Erzeugung zweier Betriebsstufen,
**dadurch gekennzeichnet, dass** der Sauganschluss (5, 23, 30) mit einer zentralen Saugniere (14, 22) verbunden ist und der Druckanschluss (7, 24, 31) mit einer von zwei unterschiedlich ausgebildeten Drucknieren (12, 13, 20, 21) in Abhängigkeit von der gewählten Betriebsstufe verbindbar ist, **wobei** die Umschalteinrichtung (4) mit der Antriebseinheit (2) zur wahlweisen Steuerung der Antriebsrichtung der Pumpenstufe (3) verbunden ist, um in Abhängigkeit von der gewählten Drehrichtung unterschiedliche Förderdrücke und Fördervolumina bereitzustellen.

2. Verdrängerpumpe nach Anspruch 1, **dadurch gekennzeichnet, dass** die beiden Drucknieren (12, 13) über Rückschlagventile (8, 9) mit dem einzigen Druckanschluss (7) verbunden sind.

3. Verdrängerpumpe nach einem der Ansprüche 1 oder 2,
**dadurch gekennzeichnet, dass** die beiden Drucknieren (12, 13) über Rückschlagventile (10, 11) mit dem Sauganschluss (5) verbunden sind.

4. Verdrängerpumpe nach einem der Ansprüche 1 bis 3,
**dadurch gekennzeichnet, dass** die Umschalteinrichtung (4) zur Verbindung des Druckanschlusses (7, 24, 31) mit der einen oder der anderen Druckniere (12, 13, 20, 21) ausgebildet ist.

5. Verdrängerpumpe nach einem der Ansprüche 1 bis 4,
**dadurch gekennzeichnet, dass** der Pumpstufe (3) ein Mehrwegeventil (19, 25) nachgeschaltet ist und dass die Umschalteinrichtung (4) zum Ansteuern des Mehrwegeventils (19, 25) ausgebildet ist, so dass eine wahlweise Verbindung der einen Druckniere (20, 21) oder der anderen Druckniere (21, 20) mit dem Druckanschluss (24) herstellbar ist.

6. Verdrängerpumpe nach Anspruch 5, **dadurch gekennzeichnet, dass** das Mehrwegeventil (19, 25) zwei Schaltstufen hat, wobei die Schaltstufen zur Verbindung des Sauganschlusses (23, 30) mit der in der jeweiligen Betriebsstufe nicht genutzten Druckniere (20, 21) ausgebildet sind.

7. Verdrängerpumpe nach Anspruch 5 oder 6, **dadurch gekennzeichnet, dass** das Mehrwegeventil (19, 25) eine Schaltstufe hat, in der der Druckanschluss (24, 31) abgesperrt ist.

8. Verdrängerpumpe nach einem der Ansprüche 1 bis 7,
**dadurch gekennzeichnet, dass** die Pumpenstufe (3) als Innenzahnradpumpe oder als G-Rotorpumpe ausgebildet ist.

9. Verdrängerpumpe nach Anspruch 8, **dadurch gekennzeichnet, dass** ein Trennbereich (t1) zwischen Saugniere (14, 22) und einer der Drucknieren (12, 20) bei der als Innenzahnradpumpe ausgebildeten Pumpenstufe (3) innerhalb des Bereichs der größten Exzentrizität zwischen einem Innenläufer (15) und einem Außenläufer (16) und ein anderer Trennbereich (t2) der Saugniere und der anderen der Drucknieren (13, 21) außerhalb des Bereichs der größten Exzentrizität angeordnet ist.

## Claims

1. Positive displacement pump (1), in particular for conveying oil in a gearbox or a combustion engine of a motor vehicle, having a pump stage (3) that can be driven by a drive unit (2), having a suction port (5, 23, 30) for introducing oil and a pressure port (7, 24, 31) for delivering oil and having a switchover device (4) for creating two operating stages, **characterized in that** the suction port (5, 23, 30) is connected to a central kidney-shaped suction cavity (14, 22) and the pressure port (7, 24, 31) can be connected to one of two differently designed kidney-shaped pressure cavities (12, 13, 20, 21) according to the selected operating stage, wherein the switchover device (4) is connected to the drive unit (2) for the purpose of selectively controlling the drive direction of the pump stage (3) in order to provide different conveying pressures and conveying devices according to the selected direction of rotation.

2. Positive displacement pump according to Claim 1, **characterized in that** the two kidney-shaped pressure cavities (12, 13) are connected to the single pressure port (7) via check valves (8, 9).

3. Positive displacement pump according to either of Claims 1 and 2, **characterized in that** the two kidney-shaped pressure cavities (12, 13) are connected to the suction port (5) via check valves (10, 11).

4. Positive displacement pump according to one of Claims 1 to 3, **characterized in that** the switchover device (4) is designed for connecting the pressure port (7, 24, 31) to one or the other of the kidney-shaped pressure cavities (12, 13, 20, 21).

5. Positive displacement pump according to one of Claims 1 to 4, **characterized in that** a multi-directional valve (19, 25) is connected downstream of the pump stage (3), and **in that** the switchover device (4) is designed for activating the multi-directional valve (19, 25), so that a selective connection of one kidney-shaped pressure cavity (20, 21) or the other kidney-shaped pressure cavity (21, 20) to the pressure port (24) can be established.

6. Positive displacement pump according to Claim 5, **characterized in that** the multi-directional valve (19, 25) has two switching stages, wherein the switching stages are configured for connecting the suction port (23, 30) to the kidney-shaped pressure cavity (20, 21) not used in the respective operating stage.

7. Positive displacement pump according to Claim 5 or 6, **characterized in that** the multi-directional valve (19, 25) has a switching stage in which the pressure port (24, 31) is shut off.

8. Positive displacement pump according to one of Claims 1 to 7, **characterized in that** the pump stage (3) is designed as an internal gear pump or as a G-rotor pump.

9. Positive displacement pump according to Claim 8, **characterized in that** a separation region (t1) between the kidney-shaped suction cavity (14, 22) and one of the kidney-shaped pressure cavities (12, 20), in the case of the pump stage (3) designed as an internal gear pump, is arranged inside the region of maximum eccentricity between an inner rotor (15) and an outer rotor (16) and another separation region (t2) of the kidney-shaped suction cavity and the other of the kidney-shaped pressure cavities (13, 21) is arranged outside the region of maximum eccentricity.

## Revendications

1. Pompe à déplacement positif (1), en particulier pour le transport d'huile dans une boîte de vitesses ou un moteur à combustion interne d'un véhicule automobile, avec un étage de pompe (3) pouvant être entraîné par un dispositif d'entraînement (2), avec un raccord d'aspiration (5, 23, 30) pour l'introduction d'huile et avec un raccord de refoulement (7, 24, 31) pour la décharge d'huile et avec un dispositif de commutation (4) pour la production de deux étages de fonctionnement,
**caractérisée en ce que** le raccord d'aspiration (5, 23, 30) est raccordé à une coulisse d'aspiration centrale (14, 22) et le raccord de refoulement (7, 24, 31) peut être raccordé à une de deux coulisses de refoulement de forme différente (12, 13, 20, 21) en fonction de l'étage de fonctionnement choisi, dans laquelle le dispositif de commutation (4) est relié à l'unité d'entraînement (2) pour la commande au choix du sens d'entraînement de l'étage de pompe (3), afin de fournir différentes pressions de transport et différents volumes de transport en fonction du sens de rotation choisi.

2. Pompe à déplacement positif selon la revendication 1,
**caractérisée en ce que** les deux coulisses de refoulement (12, 13) sont raccordées au raccord de refoulement unique (7) par des clapets antiretour (8, 9).

3. Pompe à déplacement positif selon une des revendications 1 ou 2, **caractérisée en ce que** les deux coulisses de refoulement (12, 13) sont raccordées au raccord d'aspiration (5) par des clapets antiretour (10, 11).

4. Pompe à déplacement positif selon l'une quelconque des revendications 1 à 3, **caractérisée en ce que** le dispositif de commutation (4) est configuré pour raccorder le raccord de refoulement (7, 24, 31) à l'une ou à l'autre coulisse de refoulement (12, 13, 20, 21).

5. Pompe à déplacement positif selon l'une quelconque des revendications 1 à 4, **caractérisée en ce qu'**une soupape à plusieurs voies (19, 25) est disposée en aval de l'étage de pompe (3) et **en ce que** le dispositif de commutation (4) est configuré pour commander la soupape à plusieurs voies (19, 25), de telle manière que l'on puisse réaliser au choix un raccordement d'une coulisse de refoulement (20, 21) ou de l'autre coulisse de refoulement (21, 20) au raccord de refoulement (24).

6. Pompe à déplacement positif selon la revendication 5,
**caractérisée en ce que** la soupape à plusieurs voies (19, 25) comporte deux étages de commutation, dans laquelle les étages de commutation sont configurés pour le raccordement du raccord d'aspiration (23, 30) à la coulisse de refoulement (20, 21) qui n'est pas utilisée dans l'étage de fonctionnement respectif.

7. Pompe à déplacement positif selon la revendication 5 ou 6,
**caractérisée en ce que** la soupape à plusieurs voies (19, 25) comporte un étage de commutation, dans lequel le raccord de refoulement (24, 31) est fermé.

8. Pompe à déplacement positif selon l'une quelconque des revendications 1 à 7, **caractérisée en ce que** l'étage de pompe (3) est constitué par une pompe à engrenages intérieurs ou par une pompe G rotor.

9. Pompe à déplacement positif selon la revendication 8,
**caractérisée en ce qu'**une zone de séparation (t1) est disposée entre des coulisses d'aspiration (14, 22) et une des coulisses de refoulement (12, 20) lorsque l'étage de pompe (3) constitué par une pompe à engrenages intérieurs se trouve à l'intérieur de la plage de plus grande excentricité entre un rotor intérieur (15) et un rotor extérieur (16) et une autre zone de séparation (t2) des coulisses d'aspiration et de l'autre des coulisses de refoulement (13, 21) est disposée à l'extérieur de la plage de plus grande excentricité.
